# EUROPEAN PATENT SPECIFICATION

(11) **EP 2 117 225 B1**
(45) Date of publication and mention of the grant of the patent: **23.05.2012**
(21) Application number: 08710517.7
(22) Date of filing: 29.02.2008
(51) Int. Cl.: H04N 5/232, H04N 7/18

(54) **AUTOMATIC TRACKING DEVICE AND AUTOMATIC TRACKING METHOD**
AUTOMATISCHE VERFOLGUNGSVORRICHTUNG UND AUTOMATISCHES VERFOLGUNGSVERFAHREN
DISPOSITIF ET PROCÉDÉ DE SUIVI AUTOMATIQUE

(30) Priority: 05.03.2007 JP 2007053973
(43) Date of publication of application: 11.11.2009
(73) Proprietor: Panasonic Corporation, Kadoma-shi Osaka 571-8501 (JP)
(72) Inventor: NAKAMURA, Yasuji, Osaka-shi, Osaka 540-6207 (JP); MORI, Yuuichiro, Osaka-shi, Osaka 540-6207 (JP); OUYABU, Satoru, Osaka-shi, Osaka 540-6207 (JP); HIGUCHI, Kazutaka, Osaka-shi, Osaka 540-6207 (JP)
(74) Representative: Grünecker, Kinkeldey, Stockmair & Schwanhäusser
(86) International application number: PCT/JP2008/000414
(87) International publication number: WO 2008/108088

(56) References cited:
- EP-A1- 1 526 733
- JP-A- 07 030 795
- JP-A- 11 337 336
- JP-A- 2004 112 615
- US-A- 5 479 203

## Description

### Technical Field

The present invention relates to an automatic tracking apparatus and an automatic tracking method for making an imaging range follow a subject by controlling a direction etc. of an imager for imaging the subject.

### Background Art

An automatic tracking apparatus used in a monitoring camera system etc. is constructed so that using a camera comprising an adjustment function of pan, tilt and zoom (PTZ) as an imager, an object of an intended subject is extracted from imaged video and PTZ control is performed so as to follow movement of the extracted object and thereby the subject can be imaged while tracking the subject.

An automatic tracking apparatus for controlling a camera so that a tracked object does not deviate from an angle of view, particularly the tracked object is displayed in a position suitable for monitoring on a screen imaged by the camera is disclosed as this kind of automatic tracking apparatus (see Patent Reference 1). This automatic tracking apparatus of Patent Reference 1 performs control of adjusting a zoom scaling factor to the wide angle side when the tracked object almost deviates from the angle of view and adjusting the zoom scaling factor to the telephoto side when the tracked object is stable within the angle of view.

Further, an automatic tracking apparatus for controlling a zoom scaling factor according to a movement region area which is a region in which an object targeted for tracking sweeps on camera coordinates is disclosed (see Patent Reference 2).

However, the conventional automatic tracking apparatus described above had the following trouble. In a camera having a PTZ function mounted in the automatic tracking apparatus, there is fear of losing a tracked object when a zoom scaling factor is increased during tracking of a subject, so that the subject has to be tracked with the zoom scaling factor being decreased. That is, the zoom scaling factor could not be increased sufficiently in order to continue tracking the subject. As a result of this, it is difficult to grasp a feature of the tracked object such as a person imaged as the subject from imaged video in the tracking. In other words, in the zoom scaling factor in the tracking in the conventional automatic tracking apparatus, the tracked object of the inside of the imaged video was too small, so that the feature of the tracked object such as the person could not be specified.

Patent Reference 1: JP-A-2006-229322
Patent Reference 2: JP-A-2001-285850

US 5 479 203 A describes a video camera apparatus having the features of the preamble of claim 1. EP 1 526 733 A1 describes a tracking method having the features of the preamble of claim 5.

### Disclosure of the Invention

### Problems that the Invention is to Solve

As described above, while a subject of a tracked object is being tracked, there is fear of losing the subject, so that the conventional automatic tracking apparatus had a problem that a zoom scaling factor could not be increased sufficiently and a feature of the tracked object such as a person could not be specified from imaged video in tracking or imaged video in which the tracking is recorded.

The invention has been implemented in view of the circumstances described above, and an object of the invention is to provide an automatic tracking apparatus and an automatic tracking method capable of larger imaging a subj ect of a tracked object even during tracking and easily specifying a feature of the tracked object such as a person.

### Means for Solving the Problems

An automatic tracking apparatus of the invention comprises the features of claim 1.

Consequently, evenduringtracking, a subject of a tracked object can be imaged larger and while continuing tracking, a feature of the tracked object such as a person imaged as the subject in imaged video in tracking can be grasped easily and the feature of the person etc. can be specified easily.

Consequently, when a tracking speed is a predetermined threshold value or less, for example, when a state in which the tracking speed is the predetermined threshold value or less continues, a feature of a tracked object such as a person can be grasped in a stable tracking state by increasing a zoom scaling factor.

The invention includes the automatic tracking apparatus wherein when the zoom scaling factor controller increases the zoom scaling factor, the imaging region controller controls a direction of the imager in a target position after the completion of zooming up and fixes a direction of the imager for the predetermined time after the completion of zooming up, and controls a direction of the imager in a target position after the completion of zooming down when the zoom scaling factor controller returns the zoom scaling factor to the original scaling factor.

Consequently, a tracked obj ect can be prevented from being lost at the time of zooming up and zooming down.

The invention includes the automatic tracking apparatus further comprising an image storage for storing video imaged by the imager before the zoom scaling factor is increased, and a display controller for combining the stored video with video imaged by the imager and displaying the video on a display screen of a display portion.

Consequently, a feature of a tracked object such as a person can be grasped by video zoomed up and at the same time, a turning direction of an imager, an ambient environment, etc. can be known by video before zooming up.

The invention includes the automatic tracking apparatus comprising a scaling factor registration part for dividing the tracking speed into plural speed zones and registering different zoom scaling factor values every speed zone, wherein the zoom scaling factor controller sets a zoom scaling factor of the imager in a zoom scaling factor value corresponding to a speed zone to which the acquired tracking speed belongs.

Consequently, it becomes unnecessary to use a large zoom scaling factor or perform zoom control always by changing a zoom scaling factor every speed zone according to a tracking speed, so that a tracked object can be prevented from being lost and stable imaged video of the tracked object can be obtained.

An automatic tracking method of the invention has the steps defined in claim 5.

Consequently, even during tracking, a subject of a tracked object can be imaged larger and while continuing tracking, a feature of the tracked object such as a person can be specified easily.

### Advantage of the Invention

According to the invention, an automatic tracking apparatus and an automatic tracking method capable of larger imaging a subject of a tracked object even during tracking and easily specifying a feature of the tracked object such as a person can be provided.

### Brief Description of the Drawings

Fig. 1 is a block diagram showing a configuration of an automatic tracking apparatus according to a first embodiment of the invention.
Fig. 2 is a flowchart showing a tracking processing procedure in the first embodiment.
Fig. 3 is a flowchart showing a video display processing procedure in the embodiment.
Fig. 4 is a diagram showing an example of combined video displayed in zoom control.
Fig. 5 is a flowchart showing a tracking processing procedure of a modified example of the first embodiment.
Fig. 6 is a block diagram showing a configuration of an automatic tracking apparatus according to a second embodiment of the invention.
Fig. 7 is a diagram showing a speed zone table and a zoom scaling factor table stored in a speed zone table storage.
Fig. 8 is a flowchart showing a tracking processing procedure in the second embodiment.

### Description of Reference Numerals and Signs

- 11: IMAGER
- 11a: ZOOM LENS
- 11b: CAMERA
- 11c: TURNTABLE
- 12: IMAGE PROCESSOR
- 13: PAN/TILT/ZOOM CONTROLLER
- 14: PAN/TILT DRIVER
- 15: ZOOM LENS DRIVER
- 16,116: ZOOM SCALING FACTOR CALCULATOR
- 17: TRACKING SPEED DECISION PORTION
- 18: PAN/TILT SPEED THRESHOLD VALUE SETTING PORTION
- 21: SPEED ZONE TABLE STORAGE

### Best Mode for Carrying Out the Invention

### (First embodiment)

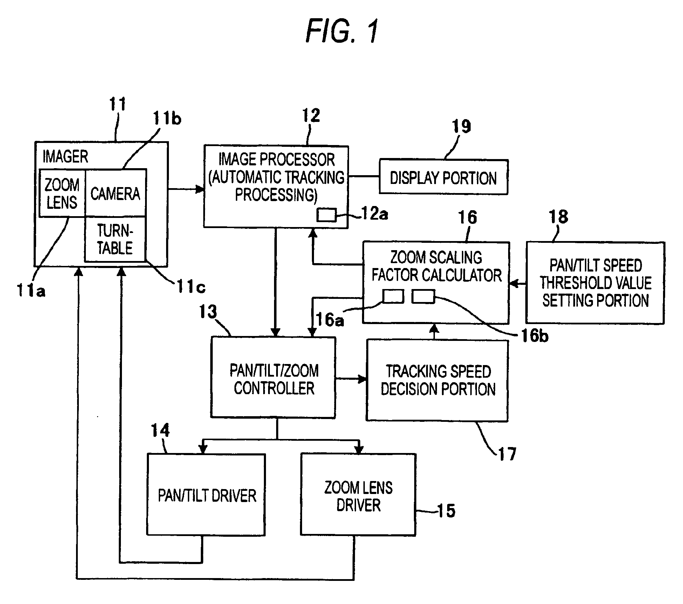

Fig. 1 is a block diagram showing a configuration of an automatic tracking apparatus according to a first embodiment of the invention. The present embodiment shows a configuration example of an automatic tracking apparatus capable of being applied to a monitoring camera system etc.

The automatic tracking apparatus is an apparatus for tracking an intended subject by controlling a direction of an imager of a camera etc. and moving an imaging region so as to include a tracked object in imaged video. The automatic tracking apparatus comprises an imager 11, an image processor 12, a pan/tilt/zoom controller 13, a pan/tilt driver 14, a zoom lens driver 15, a zoom scaling factor calculator 16, a tracking speed decision portion 17, a pan/tilt speed threshold value setting portion 18 and a display portion 19.

The imager 11 has a zoom lens 11a, a camera 11b and a turntable 11c, and outputs video imaged by the camera 11b. The image processor 12 performs automatic tracking processing using the video imaged by the imager 11, and outputs a control signal to the pan/tilt/zoom controller 13. In this automatic tracking processing, image processing using a well-known background differencemethod, a templatematchingmethod, etc. is performed and a subject region of a tracked object is extracted. Then, tracking is performed so as to display the extracted subject region in a suitable position in the imaged video.

The image processor 12 outputs video imaged by the imager 11 or its combined video to the display portion 19 as described below. The image processor 12 has image memory 12a, and video which is used in the case of generating the combined video and is imaged just before starting zoom control described below is stored in the image memory 12a. The display portion 19 displays the video imaged by the imager 11 or its combined video outputted from the image processor 12.

The pan/tilt driver 14 drives the turntable 11c to which the camera 11b is attached, and adjusts a direction of the camera 11b in a pan direction and a tilt direction. Consequently, an imaging region by the camera 11b is moved and this can follow a subject of a tracked object. The zoom lens driver 15 drives the zoom lens 11a, and adjusts a zoom scaling factor to the telephoto side or the wide angle side. Consequently, an angle of view of imaged video by the camera 11b is adjusted and a detail can be imaged in the telephoto side or the whole wide range can be imaged in the wide angle side.

The pan/tilt/zoom controller 13 controls the pan/tilt driver 14 and the zoom lens driver 15. The tracking speed decision portion 17 calculates a tracking speed using the present zoom scaling factor and a pan/tilt speed obtained from the pan/tilt/zoom controller 13. The pan/tilt speed threshold value setting portion 18 sets a threshold value of the pan/tilt speed. This threshold value of the pan/tilt speed may be set in a previously registered value or may be set in a value given by an input operation of a user.

The zoom scaling factor calculator 16 has a speed memory 16a for storing a tracking speed calculated by the tracking speed decision portion 17 and a zoom scaling factor memory 16b in which a zoom scaling factor at the time of zooming up is registered. The zoom scaling factor calculator 16 compares a tracking speed stored in the speed memory 16a with a tracking speed threshold value calculated using a threshold value of a pan/tilt speed set by the pan/tilt speed threshold value setting portion 18, and gives instructions to change a zoom scaling factor based on its comparison result. The zoom scaling factor calculator 16 calculates a target pan/tilt coordinate after the completion of zooming up or zooming down.

Here, the image processor 12, the pan/tilt/zoom controller 13 and the pan/tilt driver 14 implement a function of an imaging region controller. The pan/tilt/zoom controller 13 and the tracking speed decision portion 17 implement a function of a tracking speed acquisition portion. The pan/tilt/zoom controller 13 and the zoom scaling factor calculator 16 implement a function of a zoom scaling factor controller. The image memory 12a has a function of an image storage. The image processor 12 has a function of a display controller.

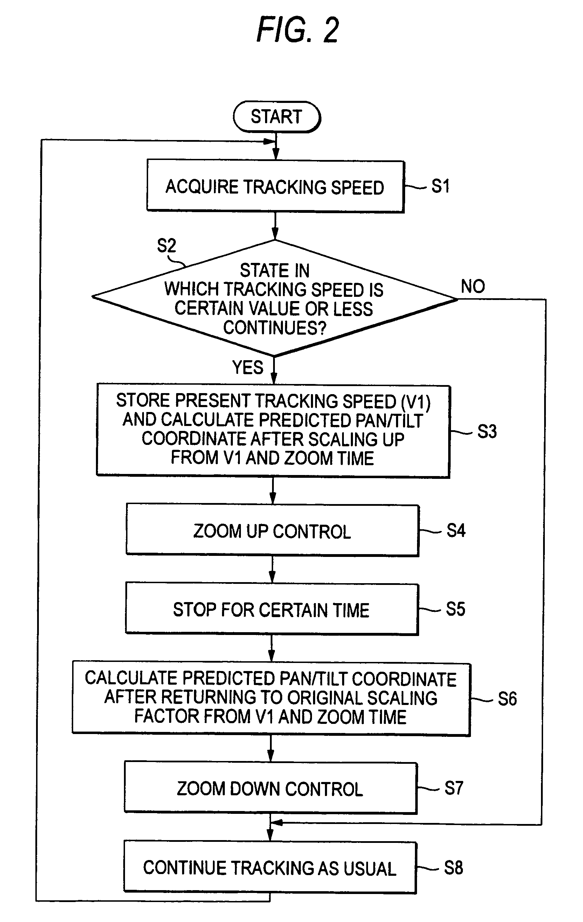

Fig. 2 is a flowchart showing a tracking processing procedure in the first embodiment. First, an automatic tracking apparatus calculates a tracking speed using the present zoom scaling factor and a pan/tilt speed obtained from the pan/tilt/zoom controller 13 by the tracking speed decision portion 17 (step S1).

Then, the automatic tracking apparatus determines whether or not a state in which a tracking speed is a certain value (tracking speed threshold value) or less continues for a predetermined time by the zoom scaling factor calculator 16 (step S2). When the state in which the tracking speed is the certain value or less continues, the automatic tracking apparatus stores the present tracking speed V1 in the speed memory 16a by the zoom scaling factor calculator 16, and calculates a predicted target pan/tilt coordinate after zooming up based on the tracking speed V1 and zoom time taken to zoom up to a zoom scaling factor registered in the zoom scaling factor memory 16b (step S3). Here, in the embodiment, the changed zoom scaling factor is a certain value registered in the zoom scaling factor memory 16b, but may be a scaling factor relative to a zoom scaling factor at the time of tracking instead of this certain value. As the relative scaling factor, for example, a scaling factor in which the zoom scaling factor at the time of tracking is multiplied by a predetermined number is given. At this time, the automatic tracking apparatus stores the present video in the image memory 12a by the image processor 12.

Subsequently, the automatic tracking apparatus controls the pan/tilt driver 14 and the zoom lens driver 15 by the pan/tilt/zoom controller 13, and adjusts a direction of the camera 11b to the predicted target pan/tilt coordinate while zooming up (step S4). After zooming up, the automatic tracking apparatus controls the pan/tilt driver 14 by the pan/tilt/zoom controller 13, and stops the turntable 11c to which the camera 11b is attached for a certain time (step S5). Consequently, the direction of the camera 11b is fixed.

After a lapse of a certain time, the automatic tracking apparatus calculates a target pan/tilt coordinate predicted after zooming down from zoom time taken to zoom down to the original zoom scaling factor and the tracking speed V1 stored in the speed memory 16a by the zoom scaling factor calculator 16 (step S6). The automatic tracking apparatus controls the pan/tilt driver 14 and the zoom lens driver 15 by the pan/tilt/zoom controller 13, and adjusts a direction of the camera 11b to the predicted target pan/tilt coordinate while zooming down (step S7). In addition, in the embodiment, the zoom scaling factor is returned to the original scaling factor value in the case of zooming down in step S7, but may be returned to the wide angle side slightly than the original scaling factor value in order to reduce a possibility of losing a tracked obj ect.

Then, the automatic tracking apparatus continues automatic tracking processing by the image processor 12 as usual (step S8). Thereafter, the flowchart returns to processing of step S1. On the other hand, when the state in which the tracking speed is the certain value or less does not continue for the predetermined time in step S1, processing of step S8 is performed.

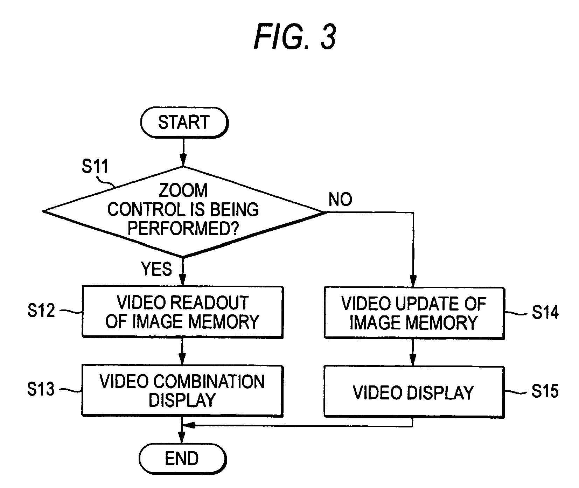

Fig. 3 is a flowchart showing a video display processing procedure in the embodiment. This processing is performed as a routine different from Fig. 2 by the image processor 12 of the inside of the automatic tracking apparatus.

First, the image processor 12 determines whether or not zoom control performed in processing of steps S3 to S7 described above is being performed (step S11). When the zoom control is being performed, the image processor 12 reads out video stored in the image memory 12a (step S12). Then, the image processor 12 combines the readout video with video imaged by the imager 11, and outputs this combined video to the display portion 19 (step S13). Consequently, the combined video is displayed on the display portion 19. Thereafter, the present processing is ended. On the other hand, when the zoom control is not being performed in step S11, the image processor 12 writes video imaged by the imager 11 into the image memory 12a and updates video (step S14) and outputs its video to the display portion 19 (step S15). Consequently, the video imaged by the imager 11 is displayed on the display portion 19 as it is. Thereafter, the present processing is ended.

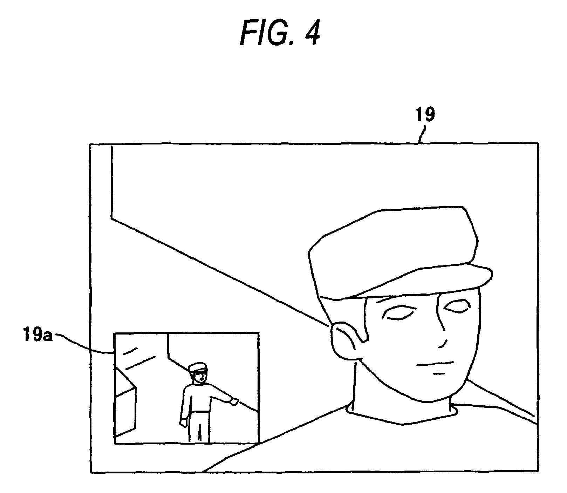

Fig. 4 is a diagram showing an example of combined video displayed in zoom control. A window 19a is disposed in the lower left of a screen of the display portion 19, and video (still image) stored in the image memory 12a is displayed in this window 19a. Consequently, a turning direction of a camera, an ambient environment, etc. can be known from the video displayed in the window 19a even in zooming up in order to grasp a feature of a face etc. of a person.

According to the automatic tracking apparatus of the first embodiment thus, a subject of a tracked object can be imaged larger while continuing tracking. Consequently, in imaged video in tracking or imaged video in which the tracking is recorded, a feature of a person etc. imaged in tracking video as the subject can be grasped easily and the feature of the tracked object can be specified.

In addition, in the embodiment described above, when the state in which the tracking speed is the certain value or less continues, zoom control of changing a zoom scaling factor is always performed, but when the zoom control is performed repeatedlymanytimes, there is fear of losing (losing) a tracked object and also it becomes difficult to see video. Hence, it is sufficient to grasp a feature of the tracked object one time, so that the number of zoom controls may be limited.

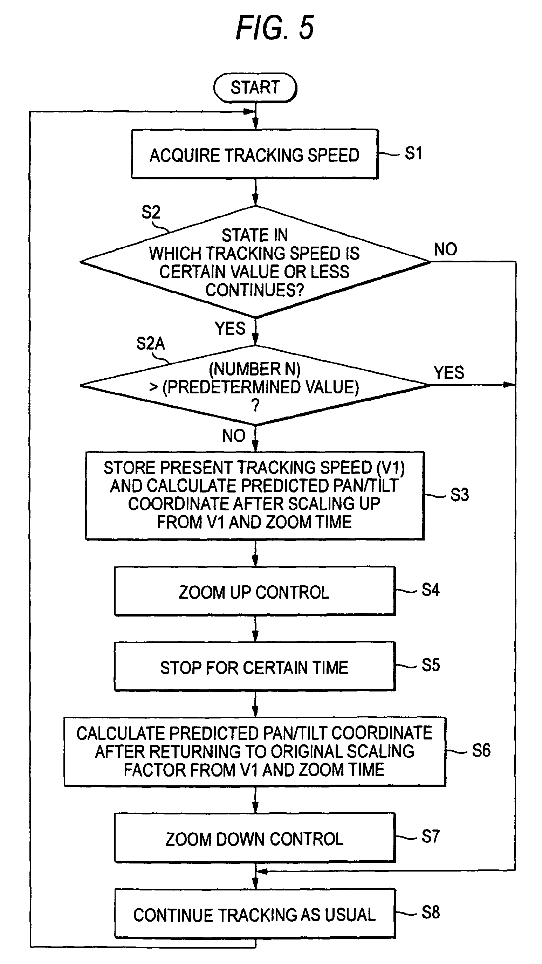

Fig. 5 is a flowchart showing a tracking processing procedure of a modified example of the first embodiment. Here, the explanation is omitted by assigning the same step number to the same step processing as that of Fig. 2.

In this modified example, when a state in which a tracking speed is a certain value or less continues for a predetermined time in step S2, an automatic tracking apparatus determines whether or not the number N of zoom controls exceeds a predetermined value (forexample, three times) (step S2A). When the number N of zoom controls does not exceed the predetermined value, the automatic tracking apparatus proceeds to processing of step S3 or later described above and when the number N of zoom controls is less than the predetermined value, the automatic tracking apparatus proceeds to processing of step S8.

By limiting the number of zoom controls thus, a probability of losing a tracked object can be reduced and tracking can be continued more surely.

### (Second embodiment)

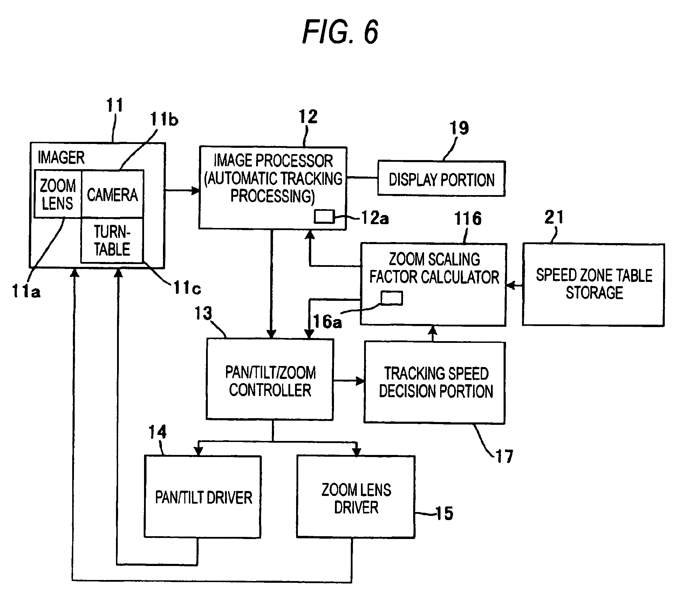

Fig. 6 is a block diagram showing a configuration of an automatic tracking apparatus according to a second embodiment of the invention. In addition, the explanation is omitted by assigning the same numerals to the same components as those of the first embodiment.

In the second embodiment, a speed zone table storage 21 is disposed instead of the pan/tilt speed threshold value setting portion 18 in the first embodiment. This speed zone table storage 21 has a function of a scaling factor registration part. Unlike the zoom scaling factor calculator 16 in the first embodiment, zoom scaling factor memory 16b is omitted in a zoom scaling factor calculator 116. This zoom scaling factor calculator 116 gives instructions to change a zoom scaling factor according to a speed zone to which a tracking speed stored in speed memory 16a belongs.

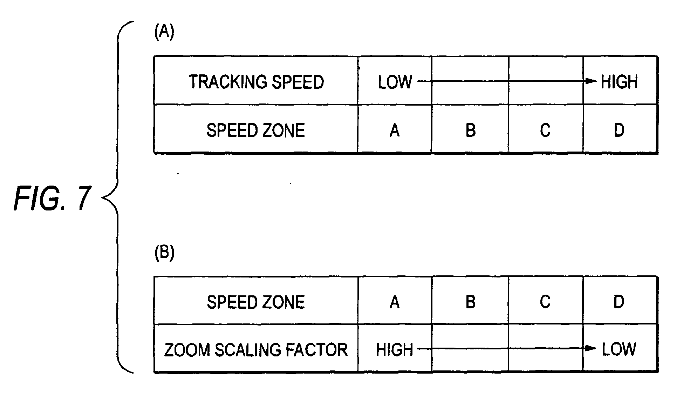

Fig. 7 is a diagram showing a table stored in the speed zone table storage 21. In Fig. 7, (A) shows a speed zone table and (B) shows a zoom scaling factor table. Speed zones (speed zones A to D) divided into four pieces according to values of tracking speeds calculated from the present zoom scaling factor and a pan/tilt speed are shown in the speed zone table. The tracking speeds become high from the speed zone A toward the speed zone D. In addition, a method for dividing the speed zone is not limited to this, and is arbitrary.

On the other hand, zoom scaling factors corresponding to each of the speed zones are registered in the zoom scaling factor table. The zoom scaling factors become low from the speed zone A toward the speed zone D. By using these tables, the zoom scaling factors are stepwise set so as to become low (to the wide angle side) when a tracking speed calculated from the present zoom scaling factor and a pan/tilt speed is high and become high (to the telephoto side) when the tracking speed is low.

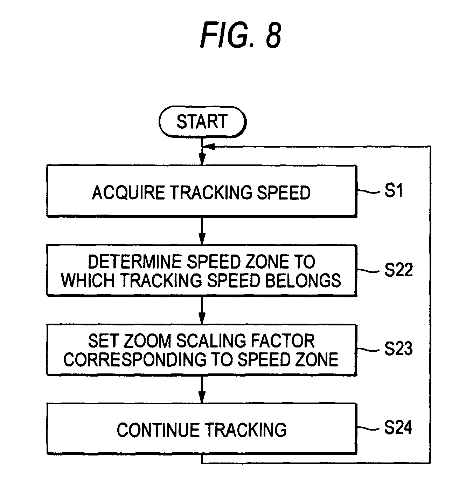

Fig. 8 is a flowchart showing a tracking processing procedure in the second embodiment. First, an automatic tracking apparatus calculates a tracking speed using the present zoom scaling factor and a pan/tilt speed obtained from a pan/tilt/zoom controller 13 by a tracking speed decision portion 17 (step S21).

Then, the automatic tracking apparatus determines a speed zone corresponding to the calculated tracking speed with reference to the speed zone table of the inside of the speed zone table storage 21 by the zoom scaling factor calculator 116 (step S22). Further, the automatic tracking apparatus sets a zoom scaling factor corresponding to this determined speed zone with reference to the zoom scaling factor table of the inside of the speed zone table storage 21 (step S23). Then, tracking is continued by the set zoom scaling factor (step S24). Thereafter, the flowchart returns to processing of step S21.

According to the automatic tracking apparatus of the second embodiment thus, a zoom scaling factor is changed only when a tracking speed changes so as to exceed a speed zone, so that it is unnecessary to perform zoom control of changing the zoom scaling factor frequently, and a possibility of losing a tracked object can be reduced. It becomes unnecessary to display the window 19a in the lower left of the screen of the display portion 19 as shown in Fig. 4, so that it becomes easy to see video. Therefore, a subject of the tracked object can be imaged larger while continuing tracking surely, and in imaged video in tracking or imaged video in which the tracking is recorded, a feature of a person etc. imaged in tracking video as the subject can be specified easily.

In addition, the invention is not limited to the embodiments described above, and the invention is also intended to be changed and applied by those skilled in the art based on a well-known technique and mention of the description, and it is included in the scope of protection.

The invention has been described in detail with reference to the specific embodiments, but it is apparent to those skilled in the art that various changes or modifications can be made without departing from the scope of the invention.

The present application is based on Japanese patent application (patent application No.2007-053973) filed on March 5, 2007.

### Industrial Applicability

The invention has an effect capable of larger imaging a subject of a tracked object even during tracking and easily specifying a feature of the tracked object such as a person, and is useful in, for example, an automatic tracking apparatus and an automatic tracking method for making an imaging range follow a subject by controlling a direction etc. of an imager for imaging the subject used in a monitoring camera system etc.

## Claims

1. An automatic tracking apparatus comprising:
an imaging region controller (12, 13, 14) which is adapted to control a direction of an imager (11) having a pan/tilt function and a zoom function and is adapted to adjust an imaging region so as to include a tracked object in an imaged video; and
a tracking speed acquisition portion (13, 17) which is adapted to acquire a tracking speed of the imager based on control information for controlling the imager,
**characterized by**
a zoom scaling factor controller (13, 16) which is adapted to set a zoom scaling factor of the imager according to the acquired tracking speed; and
when the acquired tracking speed is a predetermined threshold value or less, the zoom scaling factor controller (13, 16) is adapted to increase the zoom scaling factor and return the zoom scaling factor to the original scaling factor after a lapse of a predetermined time.

2. The automatic tracking apparatus according to claim 1, wherein the imaging region controller (12, 13, 14) is adapted to control a direction of the imager in a target position after the completion of zooming up and to fix the direction of the imager (11) for the predetermined time after the completion of zooming up when the zoom scaling factor controller (13, 16) increases the zoom scaling factor, and is adapted to control the direction of the imager in the target position after the completion of zooming down when the zoom scaling factor controller returns the zoom scaling factor to the original scaling factor.

3. The automatic tracking apparatus according to any of claims 1 to 2 further comprising an image storage (12a) for storing the video imaged by the imager (11) before the zoom scaling factor is increased, and a display controller (12) for combining the stored video with the video imaged by the imager and displaying the combined video on a display screen of a display portion (19).

4. The automatic tracking apparatus according to claim 1, comprising a scaling factor registration part (21) for dividing the tracking speed into plural speed zones and registering different zoom scaling factor values every speed zone, wherein the zoom scaling factor controller (13, 16) is adapted to set a zoom scaling factor of the imager (11) in a zoom scaling factor value corresponding to a speed zone to which the acquired tracking speed belongs.

5. An automatic tracking method comprising:
an imaging region control step of controlling a direction of an imager having a pan/tilt function and a zoom function and adjusting an imaging region so as to include a tracked object in imaged video; and
a tracking speed acquisition step of acquiring a tracking speed of the imager from control information for controlling the imager,
**characterized by**
a zoom scaling factor control step of setting a zoom scaling factor of the imager according to the acquired tracking speed; and
when the acquired tracking speed is a predetermined threshold value or less, the zoom scaling factor controller (13, 16) is adapted to increase the zoom scaling factor and return the zoom scaling factor to the original scaling factor after a lapse of a predetermined time.

## Patentansprüche

1. Automatische Verfolgungsvorrichtung, die umfasst:
eine Bildbereich-Steuereinrichtung (12, 13, 14), die so eingerichtet ist, dass sie eine Richtung einer Bilderzeugungseinrichtung (11) mit einer Schwenk/Neige-Funktion sowie einer Zoom-Funktion steuert, und so eingerichtet ist, dass sie einen Bilderzeugungsbereich so anpasst, dass ein verfolgtes Objekt in einem Videobild enthalten ist; und
einen Abschnitt (13, 17) zum Erfassen einer Verfolgungsgeschwindigkeit, der so eingerichtet ist, dass er eine Verfolgungsgeschwindigkeit der Bilderzeugungseinrichtung auf Basis von Steuerungsinformationen zum Steuern der Bilderzeugungseinrichtung erfasst,
**gekennzeichnet durch**
eine Einrichtung (13, 16) zum Steuern eines Zoom-Skalierfaktors, die so eingerichtet ist, dass sie einen Zoom-Skalierfaktor der Bilderzeugungseinrichtung entsprechend der erfassten Verfolgungsgeschwindigkeit einstellt; und
die Einrichtung (13, 16) zum Steuern des Zoom-Skalierfaktors so eingerichtet ist, dass sie, wenn die erfasste Verfolgungsgeschwindigkeit auf einem vorgegebenen Schwellenwert oder darunter liegt, den Zoom-Skalierfaktor erhöht und den Zoom-Skalierfaktor nach Ablauf einer vorgegebenen Zeit auf den ursprünglichen Skalierfaktor zurückstellt.

2. Automatische Verfolgungsvorrichtung nach Anspruch 1, wobei die Einrichtung (12, 13, 14) zum Steuern des Bilderzeugungsbereiches so eingerichtet ist, dass sie eine Richtung der Bilderzeugungseinrichtung an einer Zielposition nach Abschluss von Heranzoomen steuert und die Richtung der Bilderzeugungseinrichtung (11) über die vorgegebene Zeit nach dem Abschluss von Heranzoomen fixiert, wenn die Einrichtung (13, 16) zum Steuern des Zoom-Skalierfaktors den Zoom-Skalierfaktor erhöht, und so eingerichtet ist, dass sie die Richtung der Bilderzeugungseinrichtung an der Zielposition nach Abschluss von Herauszoomen steuert, wenn die Einrichtung zum Steuern des Zoom-Skalierfaktors den Zoom-Skalierfaktor auf den ursprünglichen Skalierfaktor zurückstellt.

3. Automatische Verfolgungsvorrichtung nach einem der Ansprüche 1 bis 2, die des Weiteren einen Bildspeicher (12a), in dem das durch die Bilderzeugungseinrichtung (11) erzeugte Videobild gespeichert wird, bevor der Zoom-Skalierfaktor erhöht wird, und eine Anzeige-Steuereinrichtung (12) umfasst, die das gespeicherte Videobild mit dem durch die Bilderzeugungseinrichtung erzeugten Videobild kombiniert und das kombinierte Videobild auf einem Anzeigebildschirm eines Anzeigeabschnitts (19) anzeigt.

4. Automatische Verfolgungsvorrichtung nach Anspruch 1, die einen Teil (21) zum Registrieren von Skalierfaktoren umfasst, mit dem die Verfolgungsgeschwindigkeit in mehrere Geschwindigkeitszonen aufgeteilt wird und unterschiedliche Werte des Zoom-Skalierfaktors für jede Geschwindigkeitszone registriert werden, wobei die Einrichtung (13, 16) zum Steuern des Zoom-Skalierfaktors so eingerichtet ist, dass sie einen Zoom-Skalierfaktor der Bilderzeugungseinrichtung (11) auf einen Wert des Zoom-Skalierfaktors einstellt, der einer Geschwindigkeitszone entspricht, zu der die erfasste Verfolgungsgeschwindigkeit gehört.

5. Automatisches Verfolgungsverfahren, das umfasst:
einen Schritt zum Steuern eines Bilderzeugungsbereiches, in dem eine Richtung einer Bilderzeugungseinrichtung mit einer Schwenk/Neige-Funktion sowie einer Zoom-Funktion gesteuert wird und ein Bilderzeugungsbereich so angepasst wird, dass ein verfolgtes Objekt in einem Videobild enthalten ist; und
einen Schritt zum Erfassen einer Verfolgungsgeschwindigkeit, in dem eine Verfolgungsgeschwindigkeit der Bilderzeugungseinrichtung aus Steuerungsinformationen zum Steuern der Bilderzeugungseinrichtung erfasst wird,
**gekennzeichnet durch**
einen Schritt zum Steuern eines Zoom-Skalierfaktors, in dem ein Zoom-Skalierfaktor der Bilderzeugungseinrichtung entsprechend der erfassten Verfolgungsgeschwindigkeit eingestellt wird; und
die Einrichtung (13, 16) zum Steuern des Zoom-Skalierfaktors so eingerichtet ist, dass sie, wenn die erfasste Verfolgungsgeschwindigkeit auf einem vorgegebenen Schwellenwert oder darunter liegt, den Zoom-Skalierfaktor erhöht und den Zoom-Skalierfaktor nach Ablauf einer vorgegebenen Zeit auf den ursprünglichen Skalierfaktor zurückstellt.

## Revendications

1. Appareil de suivi automatique, comprenant :
- un dispositif de commande de région d'imagerie (12, 13, 14) adapté à commander une direction d'un imageur (11) doté d'une fonction de panoramique/inclinaison et d'une fonction de zoom et adapté à ajuster une région d'imagerie de façon à inclure un objet suivi dans une vidéo imagée ; et
- une partie d'acquisition de vitesse de suivi (13, 17) adaptée à acquérir une vitesse de suivi de l'imageur en fonction d'informations de commande pour commander l'imageur ;
- **caractérisé par** :
- un dispositif de commande de facteur d'échelle de zoom (13, 16) adapté à fixer un facteur d'échelle de zoom de l'imageur suivant la vitesse de suivi acquise ; et
- lorsque la vitesse de suivi acquise est inférieure ou égale à une valeur de seuil prédéterminée, le dispositif de commande de facteur d'échelle de zoom (13, 16) est adapté à augmenter le facteur d'échelle de zoom et à ramener le facteur d'échelle de zoom au facteur d'échelle initial après un laps de temps prédéterminé.

2. Appareil de suivi automatique selon la revendication 1, dans lequel le dispositif de commande de région d'imagerie (12, 13, 14) est adapté à commander une direction de l'imageur dans une position cible après l'achèvement d'une augmentation du zoom et à fixer la direction de l'imageur (11) pendant le temps prédéterminé après l'achèvement de l'augmentation du zoom lorsque le dispositif de commande de facteur d'échelle de zoom (13, 16) augmente le facteur d'échelle de zoom, et est adapté à commander la direction de l'imageur dans la position cible après l'achèvement d'une diminution du zoom lorsque le dispositif de commande de facteur d'échelle de zoom ramène le facteur d'échelle de zoom au facteur d'échelle initial.

3. Appareil de suivi automatique selon l'une quelconque des revendications 1 à 2, comprenant en outre une mémoire de stockage d'image (12a) pour stocker la vidéo imagée par l'imageur (11), avant que le facteur d'échelle de zoom ne soit augmenté, et un dispositif de commande de visualisation (12) pour combiner la vidéo stockée avec la vidéo imagée par l'imageur et donner à visualiser la vidéo combinée sur un écran de visualisation d'une partie de visualisation (19).

4. Appareil de suivi automatique selon la revendication 1, comprenant une partie d'enregistrement de facteur d'échelle (21) pour diviser la vitesse de suivi en plusieurs zones de vitesse et enregistrer des valeurs de facteurs d'échelle de zoom différentes pour chaque zone de vitesse, dans lequel le dispositif de commande de facteur d'échelle de zoom (13, 16) est adapté à fixer un facteur d'échelle de zoom de l'imageur (11) à une valeur de facteur d'échelle de zoom correspondant à la zone de vitesse à laquelle appartient la vitesse de suivi acquise.

5. Procédé de suivi automatique comprenant :
- une étape de commande de région d'imagerie consistant à commander une direction d'un imageur doté d'une fonction de panoramique/inclinaison et d'une fonction de zoom et à ajuster une région d'imagerie de façon à ce qu'elle inclue un objet suivi dans une vidéo imagée ; et
- une étape d'acquisition de vitesse de suivi consistant à acquérir une vitesse de suivi de l'imageur à partir d'informations de commande pour commander l'imageur ;
- **caractérisé par** :
- une étape de commande de facteur d'échelle de zoom consistant à fixer un facteur d'échelle de zoom de l'imageur suivant la vitesse de suivi acquise ; et
- lorsque la vitesse de suivi acquise est inférieure ou égale à une valeur de seuil prédéterminée, le dispositif de commande de facteur d'échelle de zoom (13, 16) est adapté à augmenter le facteur d'échelle de zoom et à ramener le facteur d'échelle de zoom au facteur d'échelle initial après un laps de temps prédéterminé.
